# FASCICULE DE BREVET EUROPEEN

(11) **EP 4 366 556 B1**
(45) Date de publication et mention de la délivrance du brevet: **11.11.2026**
(21) Numéro de dépôt: 22751138.3
(22) Date de dépôt: 08.07.2022
(51) Int. Cl.: A24B 13/00, A24D 1/20, A24D 3/06, B01J 13/02

(54) **CAPSULES COEUR-COQUE AROMATISEES PELLICULEES AVEC DU POLYCHLORURE DE VINYLIDENE**
AROMATISIERTE KERN-SCHALE-KAPSELN MIT EINER BESCHICHTUNG AUS POLYVINYLIDENCHLORID
FLAVORED CORE-SHELL CAPSULES FILM-COATED WITH POLYVINYLIDENE CHLORIDE

(30) Priorité: 09.07.2021 FR 2107521
(43) Date de publication de la demande: 15.05.2024
(73) Titulaire: V. Mane Fils, 06620 Le Bar-sur-Loup (FR)
(72) Inventeur: GAUDIN, Luc, 06270 VILLENEUVE-LOUBET (FR)
(74) Mandataire: Plasseraud IP
(86) Numéro de dépôt international: PCT/FR2022/051375
(87) Numéro de publication internationale: WO 2023/281230

(56) Documents cités:
- FR-A1- 2 698 561
- US-A1- 2005 000 531
- US-A1- 2020 077 697
- US-A1- 2021 169 131

## Description

### Domaine technique

La présente invention se rapporte à une capsule cassable, sans soudure, de type coeur-coque, la coque comprenant au moins un hydrocolloïde, ladite coque étant revêtue d'au moins une couche de pelliculage en polychlorure de vinylidène lui conférant une résistance à l'eau. La capsule est destinée à être incorporée dans un dispositif de tabac à chauffer ou dans un produit en sachet oral.

### Technique antérieure

Les composés aromatiques de par leurs propriétés physicochimiques sont souvent des molécules instables et sensibles dont l'utilisation directe est difficile en aromatisation. L'encapsulation, qui utilise les propriétés filmogènes, absorbantes et/ou émulsifiantes de macromolécules pour piéger ou enrober des composés sensibles dans une mi-crocapsule, est une technologie de plus en plus utilisée et qui répond à plusieurs attentes. En effet, l'objectif principal de l'encapsulation est d'établir une barrière entre une substance et son milieu environnant. Dans le cas présent, l'encapsulation des arômes alimentaires est un procédé bien connu afin d'une part, de protéger les substances aromatisantes volatiles de l'évaporation et, d'autre part, de protéger lesdites substances de la dégradation que pourrait causer l'oxygène de l'air, la chaleur, l'humidité ou le contact avec d'autres composés. Il existe deux grands types de structures de capsules : les capsules matricielles dans lesquelles les arômes sont dispersés au sein d'un matériau support, et les capsules cœur-coque dans lesquelles les arômes sont confinés au sein d'une coque (ou membrane). Ces dernières années, de nombreuses applications de capsules aromatisées ont été développées notamment dans des dispositifs à fumer - tels que des cigarettes, les cigares - dans des dispositifs de tabac à chauffer, ou encore dans des sachets à usage oral (aussi appelé snus). Citons par exemple la demande de brevet WO 07-010407 qui décrit un dispositif à fumer sous forme d'une cigarette, qui incorpore dans son filtre une capsule caeur-coque aromatisée. La capsule décrite présente des propriétés de dureté et de déformabilité apportés par la quantité d'hydrocolloïde ajouté.

Les demandes de brevet US2021/169131A1 et US202/077697A1 décrivent des capsules cassables sans soudure de type coeur-coque, la coque comprenant un hydrocolloïde, le coeur comprenant un arôme et un solvant lipophile, ladite coque étant revêtue d'une couche de pelliculant lui conférant une résistance à l'eau, ladite couche de pelliculant comprenant du éthyl acétate. Le demande de brevet FR2698561A1 décrit des capsules coeur-coque et l'emploi d'une pellicule extérieure et propose l'usage de polychlorure de vinylidène. Les demandes de brevet WO2011042206, WO2007037962 décrivent des sachets à usage oral comprenant des capsules et/ou des microcapsules de structure matricielle et/ ou cœur-coque classiques.

La demande de brevet WO2011054516 décrit quant à elle un sachet à usage oral comprenant des capsules recouvertes de deux enrobages différents, le premier à base d'un polymère d'acide méthacrylique et le second à base de cire de paraffine.

Les demandes de brevet WO2017198876, WO2017198874, WO2020089120 décrivent des dispositifs de tabac à chauffer comprenant au moins une capsule cœur-coque enfermant au moins un arôme. Les capsules décrites dans ces documents présentent des spécificités quant aux composés utilisés dans le cœur desdites capsules, ce afin d'améliorer la qualité de l'aérosol formé.

Cependant, malgré leurs avantages, l'inconvénient principal de toutes ces capsules cœur-coque de l'art antérieur, dont la coque est formée à base de composés bio-polymères, est que ces capsules ne résistent pas à l'eau, notamment lorsque ces capsules sont immergées totalement dans l'eau. Elles ne sont pas imperméables, ce qui empêche les capsules de l'art antérieur de supporter l'humidité très importante que l'on retrouve dans les dispositifs de tabac à chauffer, ou encore dans des produits en sachet oral. Par conséquent, les applications de capsules aromatisées telles que listées précédemment ne satisfont pas les consommateurs. Un moyen classique d'éviter que les capsules ne se détériorent sous l'effet de l'humidité, est l'adjonction d'une couche de pelliculage à l'aide d'agent barrière à l'humidité telles que cires, notamment la cire de carnauba, la cire de candelilla ou la cire d'abeille, la gomme laque (en alcoolique ou solution aqueuse), l'éthylcellulose, l'hydroxypropylméthylcellulose, l'hydroxypropylcellulose, ou encore l'alcool polyvinylique. Cependant, comme leur nom l'indique, ces agents sont barrières à l'humidité ou encore appelés résistants à l'humidité, c'est-à-dire qu'ils permettent à la capsule de résister pendant un certain temps, à une certaine humidité. Mais obligatoirement, au bout d'un moment, la capsule se désintègre.

De manière surprenante, la Demanderesse a découvert que l'adjonction d'une couche de pelliculant à base de polychlorure de vinylidène sur la coque de la capsule, permettait à ladite capsule de résister à l'eau, et donc d'être imperméable. Les capsules selon la présente invention sont en mesure de résister à un test d'immersion à 60°C pendant 6 minutes (condition que l'on retrouve dans les dispositifs de tabac à chauffer) ou encore de résister à un test de dissolution réalisé selon les Pharmacopées USP, DAB, IP et EUR, pendant 20 minutes à 37°C. Dans les deux cas, les capsules pelliculées à l'aide de polychlorure de vinylidène ne se désintègrent pas et conservent leurs propriétés de résistance à l'éclatement, ainsi que la capacité à émettre un claquement audible lorsqu'elle est rompue.

### Résumé

La présente divulgation vient améliorer la situation.

Ainsi, la présente invention se rapporte à une capsule sans soudure, cassable comprenant une coque enfermant un cœur lipophile aromatique, ladite capsule étant apte à être incorporée dans un produit consommable destiné à être utilisé dans un dispositif de tabac à chauffer ou dans un sachet à usage oral.

Plus précisément, un premier objet de la présente invention se rapporte à une capsule cassable sans soudure de type cœur-coque,
- la coque comprenant un hydrocolloïde,
- le cœur comprenant un arôme et un solvant lipophile,
caractérisée en ce que ladite la coque est revêtue d'une couche de pelliculant lui conférant une résistance à l'eau, ladite couche de pelliculant comprenant du polychlorure de vinylidène.

Un deuxième objet de la présente invention se rapporte à un sachet à usage oral pour une libération immédiate et durable d'un arôme, caractérisé en ce qu'il comprend une ou plusieurs capsules contenant ledit arôme selon l'invention, lesdites capsules étant disposée(s) à l'intérieur du sachet.

Un troisième objet de la présente demande se rapporte à un produit consommable comprenant un filtre et du tabac, notamment destiné à être utilisé dans un dispositif de tabac à chauffer, caractérisé en ce que ledit filtre comprend une ou plusieurs capsules selon l'invention.

Un quatrième objet de la présente invention se rapporte à un dispositif de tabac à chauffer, caractérisé en ce qu'il comprend un produit consommable selon l'invention.

Un cinquième objet de la présente invention se rapporte à un procédé de fabrication d'une capsule cassable sans soudure comprenant une coque et un cœur, comprenant les étapes de :
(A) co-extrusion d'une phase liquide externe hydrophile et d'une phase liquide interne lipophile, la phase liquide externe comprenant de 4 à 95 % en poids d'un hydrocolloïde par rapport au poids total sec de la coque, la phase liquide interne comprenant de 5 à 70 % en poids d'agents aromatisants par rapport au poids total du cœur ;
(B) solidification et/ou gélification de la surface de la capsule obtenue à l'étape (A) par immersion dans un fluide dont la température est comprise entre 1°C et 25°C ;
(C) séchage de la capsule obtenue à l'étape (B) ;
(D) pelliculage de la capsule obtenue à l'étape (C) par un procédé de pelliculage par pulvérisation à l'air à l'aide d'une solution de pelliculage comprenant du polychlorure de vinylidène et de l'eau ;
(E) récupération de la capsule obtenue à l'étape (D).

Un sixième objet de la présente invention se rapporte à l'utilisation d'une capsule selon l'invention, comme agent de libération immédiate et durable d'un arôme, ladite capsule étant disposée dans un sachet à usage oral ou un produit consommable comprenant un filtre et du tabac, notamment destiné à être utilisé dans un dispositif de tabac à chauffer.

Un septième objet de la présente invention se rapporte à une méthode pour aromatiser un produit en sachet à usage oral selon l'invention par un consommateur, comprenant les étapes suivantes :
- le consommateur place ledit produit en sachet à usage oral entre sa gencive et sa joue ou sa lèvre supérieure notamment pendant 5 à 60 minutes ;
- à tout moment de la consommation, le consommateur éclate entre ses dents, la ou les capsule(s) comprise(s) dans le sachet à usage oral afin de libérer dans sa bouche l'arôme contenu dans la capsule.

### Brève description des dessins

D'autres caractéristiques, détails et avantages apparaîtront à la lecture de la description détaillée ci-après, et à l'analyse des dessins annexés, sur lesquels :
**Fig. 1**

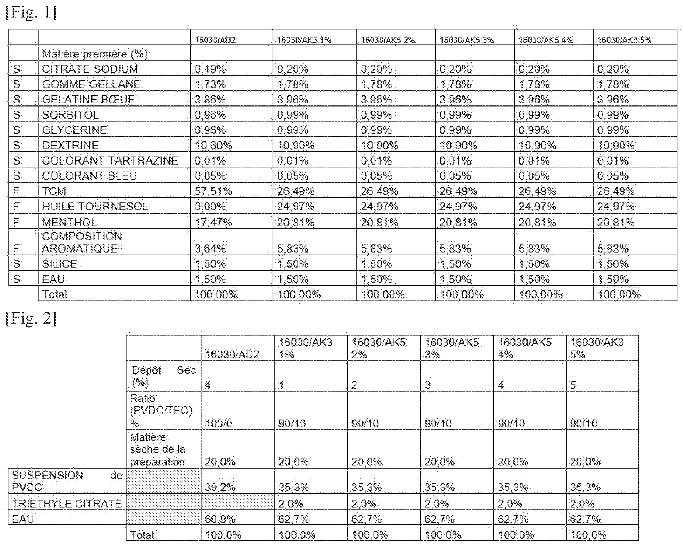

   [Fig.1] décrit différentes compositions de capsules cœur-coque selon l'invention avant pelliculage.
**Fig. 2**
   [Fig.2] décrit différentes solutions de pelliculage PVDC/TEC ainsi que les différents dépôts secs appliqués sur les capsules selon l'invention.
**Fig. 3**

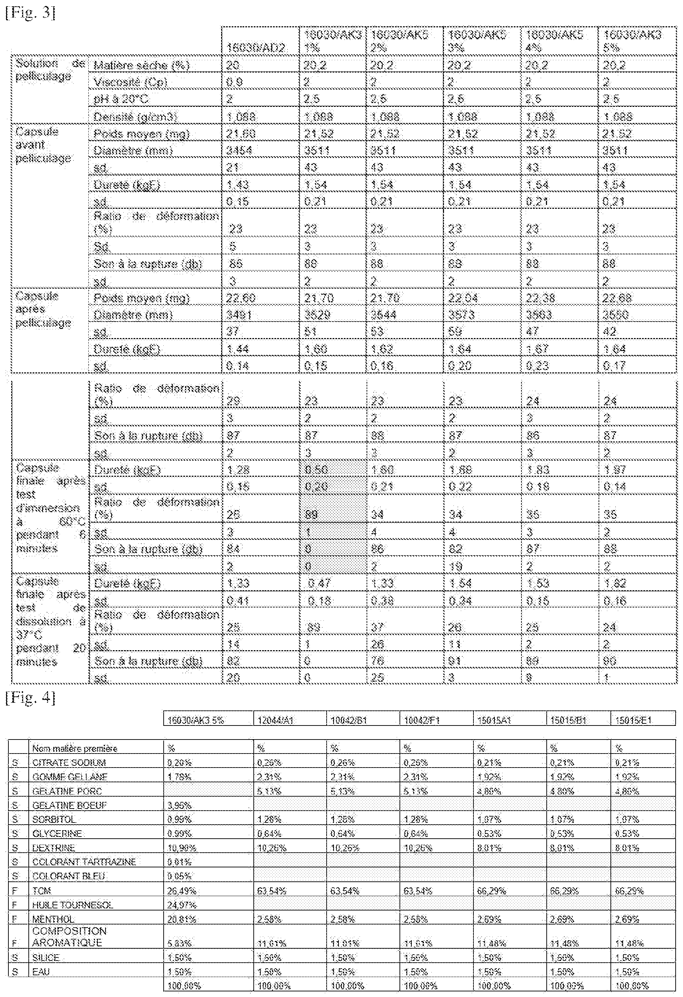

   [Fig.3] décrit les résultats des duretés, déformations, claquements audibles des capsules avant et après test d'immersion et de dissolution.
**Fig. 4**
   [Fig.4] décrit différentes compositions de capsules cœur-coque selon l'invention avant pelliculage.
**Fig. 5**

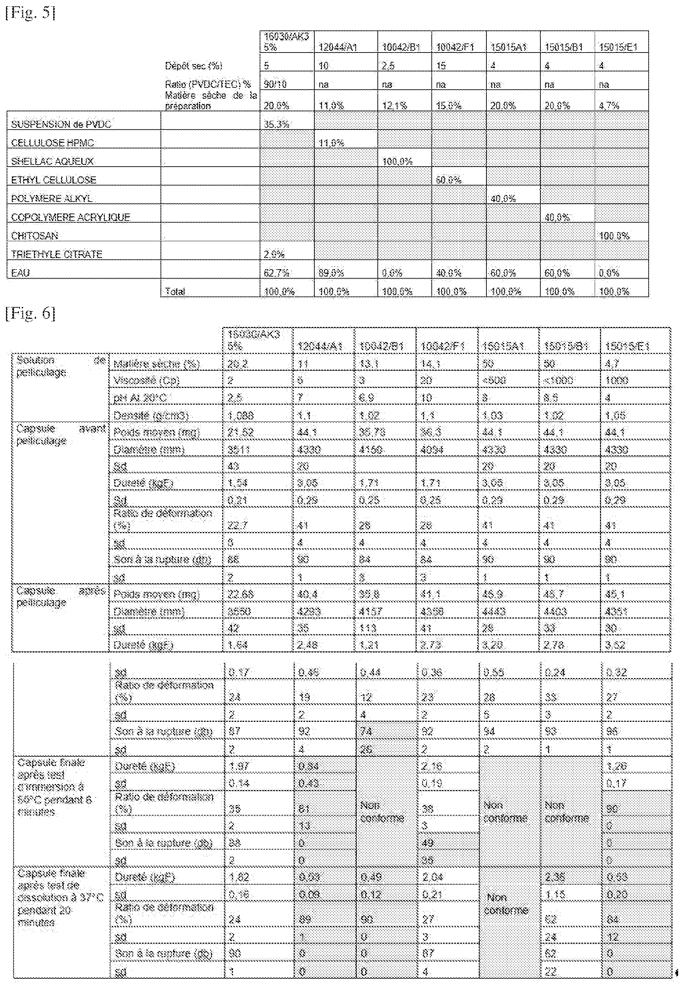

   [Fig.5] décrit différentes formulations de solutions de pelliculage PVDC/TEC ainsi que les différents dépôts secs appliqués sur les capsules selon l'invention.
**Fig. 6**
   [Fig.6] décrit les résultats des duretés, déformations, claquements audibles des capsules avant et après test d'immersion et de dissolution.
**Fig. 7**

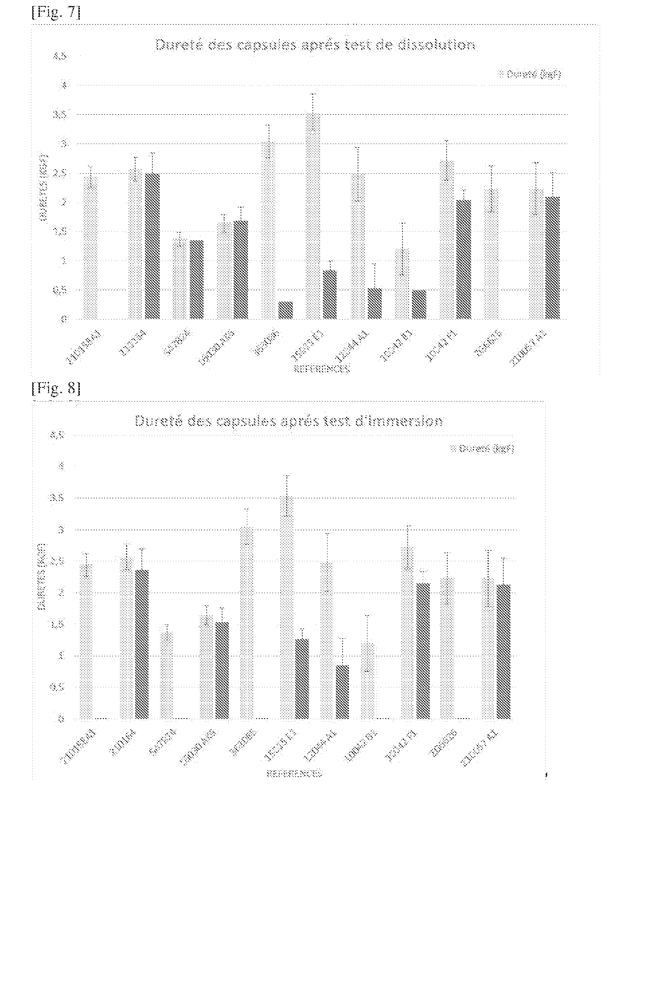

   [Fig.7] décrit les résultats du test de dissolution des capsules réalisées dans l'exemple 3.
**Fig. 8**
   [Fig.8] décrit les résultats du test d'immersion des capsules réalisées dans l'exemple 3.
**Fig. 9**

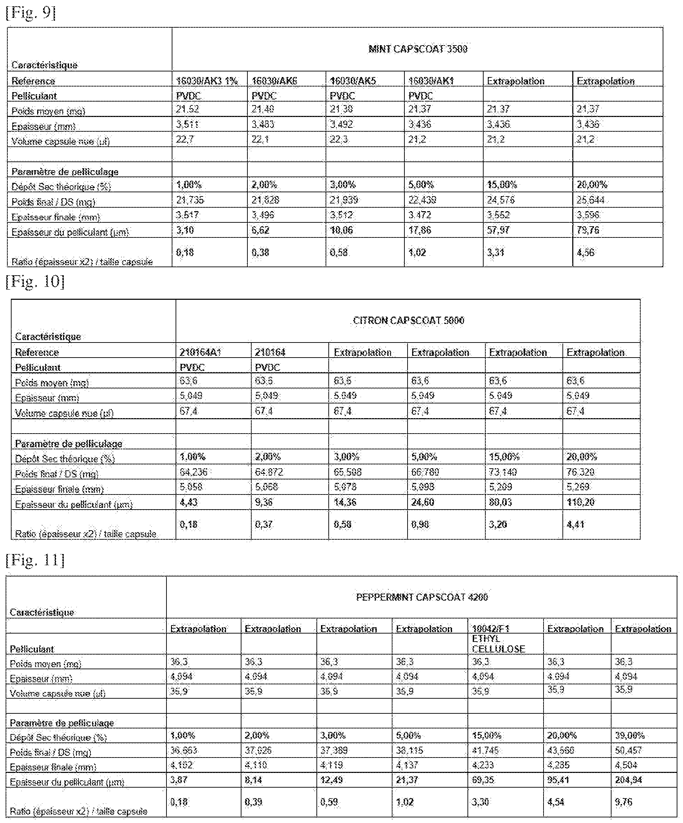

   [Fig.9] décrit l'influence de la taille de la capsule sur l'épaisseur de pelliculant.
**Fig. 10**
   [Fig.10] décrit l'influence de la taille de la capsule sur l'épaisseur de pelliculant.
**Fig. 11**
   [Fig.11] décrit l'influence de la taille de la capsule sur l'épaisseur de pelliculant.
**Fig. 12**

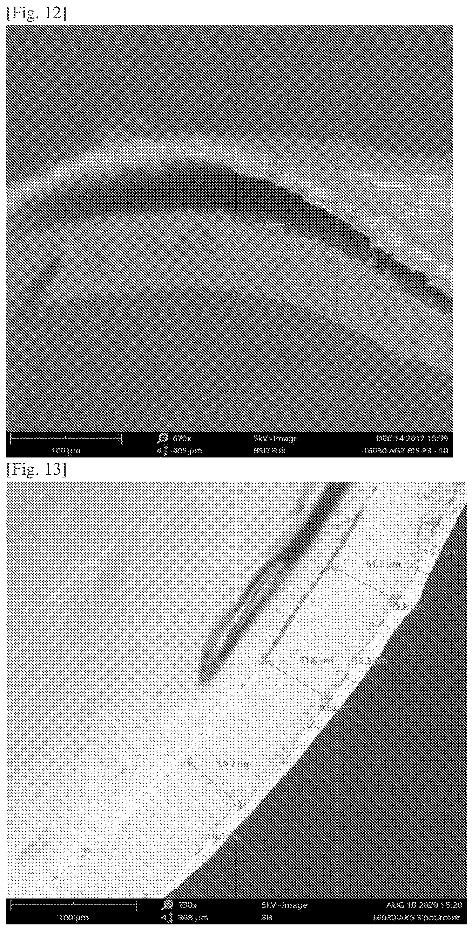

   [Fig.12] représente une photographie prise par un microscope électronique à balayage d'une coupe de la capsule selon l'exemple 1 dans laquelle la couche de pelliculant a été séparée de la coque.
**Fig. 13**
   [Fig.13] représente une photographie prise par un microscope électronique à balayage d'une coupe de la capsule selon l'exemple 1 dans laquelle la couche de pelliculant n'a pas été séparée de la coque.

### Description des modes de réalisation

Selon la présente invention, la capsule est cassable sans soudure de type cœur-coque,
- la coque comprenant un hydrocolloïde,
- le cœur comprenant un arôme et un solvant lipophile,
caractérisée en ce que ladite la coque est revêtue d'une couche de pelliculant lui conférant une résistance à l'eau, ladite couche de pelliculant comprenant du polychlorure de vinylidène.

Dans la présente invention, le terme « capsule » désigne un système d'encapsulation membranaire d'une composition, ladite capsule possédant une structure cœur-coque, la composition encapsulée composant « le cœur » qui est enfermée dans une coque (ou enveloppe) constituée d'un matériau enrobant.

La capsule selon l'invention se distingue d'un système matriciel où la composition est dispersée dans une matrice continue d'un matériau et que l'on désigne en général par le terme « microsphère ».

Le fait que la capsule soit sans soudure permet d'éviter la présence d'un point de rupture situé au niveau du scellage des deux demi-coques formant la capsule comme c'est le cas des capsules dites « softgel ». Ainsi, la capsule sans soudure présente l'avantage d'éviter les fuites liées à une rupture de la soudure.

Le terme « capsule cassable » se réfère à une capsule telle que définie ci-dessus, dans laquelle la coque peut être cassée au moyen d'une pression appliquée sur la surface extérieure de la capsule lorsque celle-ci est prise entre les doigts ou entre les dents.

Les capsules selon l'invention présentent l'avantage d'être résistantes à l'eau ou encore imperméables à l'eau. On parle ici de résistance à l'eau et non pas de résistance à l'humidité, la distinction entre ces deux propriétés étant importante. En effet, les capsules traditionnelles pelliculées à l'aide d'agents du type éthylcellulose, cire d'abeille ou autre, sont résistantes à l'humidité, c'est-à-dire que ces capsules de l'art antérieur résistent à un certain taux d'humidité ambiante, pendant un certain temps. Cependant, au bout d'un temps défini, ces capsules de l'art antérieur finissent par se désintégrer. En aucun cas ces capsules peuvent être immergées dans l'eau chaude (à 37°C ou à 60°C respectivement pendant 20 minutes ou pendant 6 minutes) et conserver leur forme et leurs propriétés de résistance à l'éclatement.

Le polychlorure de vinylidène encore appelé PVDC, est un polymère vinylique. Il est fabriqué à partir du monomère chlorure de vinylidène par polymérisation radicalaire vinylique. Les copolymères de polychlorure de vinylidène se caractérisent par une bonne résistance chimique et une haute imperméabilité à la vapeur d'eau, aux gaz, aux huiles et aux graisses. Pour ces raisons, le PVDC est classiquement utilisé en film étirable pour protéger les denrées alimentaires. Cependant, jusqu'à ce jour, il n'avait jamais été utilisé en tant qu'agent de pelliculage à la connaissance de la Demanderesse, notamment dans le cas précis de l'encapsulation. Le PVDC utilisé en tant qu'agent pelliculant, permet à la capsule selon l'invention d'avoir des propriétés de résistance à l'eau lorsque celle-ci est soumise à des conditions particulières.

La capsule selon l'invention présente une résistance à l'éclatement (appelée aussi dureté ou capacité de rupture) comprise entre 0,5 et 20 kgf (un kilogramme-force correspond à 9,81 Newton).

La résistance à l'éclatement est mesurée par la force à l'écrasement à exercer pour rompre la capsule. Plus préférentiellement, la capsule a une résistance à l'éclatement comprise entre 1 et 8 kgf, et encore plus préférentiellement entre 1 et 4 kgf. La résistance à l'éclatement des capsules est mesurée par un texturomètre TAXT + sur 20 capsules avec un piston P0,5 à une vitesse de 0,50 mm/s.

Lorsque la capsule est écrasée, celle-ci subit un phénomène de déformation. Pour que la capsule éclate tout en générant un claquement audible, cette dernière doit se déformer jusqu'à une certaine limite, limite au-delà de laquelle la capsule n'éclate pas (elle s'affaisse alors sur elle-même). A cet effet, la capsule selon l'invention doit présenter un pourcentage de déformation inférieur à 66%. Ce pourcentage correspond au rapport du diamètre final de la capsule lorsqu'elle est pressée jusqu'à la limite de rupture sur le diamètre initial de la capsule multiplié par 100.

Particulièrement, la capsule selon l'invention conserve sa résistance à l'éclatement après avoir été soumise à un test d'immersion dans de l'eau déminéralisée à 60 °C sous agitation à 500t/min pendant 6 minutes. On entend par « conserve sa résistance à l'éclatement » le fait que la résistance à l'éclatement de la capsule ne varie pas plus de ± 15% par rapport à sa valeur avant le test d'immersion.

En conséquence, les capsules selon l'invention permettent d'avoir un champ d'application très large, dès lors que des propriétés de résistance à l'eau sont requises.

En outre, la capsule selon l'invention conserve sa résistance à l'éclatement après avoir été soumise à un test de dissolution dans l'eau à 37°C pendant 20 minutes. On entend par « conserve sa résistance à l'éclatement » le fait que la résistance à l'éclatement de la capsule ne varie pas plus de ± 15% par rapport à sa valeur avant le test de dissolution. En effet, de façon surprenante, la Demanderesse a également découvert que la capsule selon l'invention lorsqu'elle est soumise à un test de dissolution selon les pharmacopées USP, DAB, IP et EUR, ladite capsule conserve ses qualités de résistance à l'éclatement. En effet la capsule soumise audit test pendant 20 minutes à 37°C ne se dissout pas, conserve sa forme sphérique, conserve sa résistance à l'éclatement ainsi que sa capacité à émettre un claquement audible lorsqu'elle est éclatée.

Afin d'obtenir ces valeurs particulières de résistance à l'éclatement dans de telles conditions (test d'immersion dans l'eau à 60 °C pendant 6 minutes et test de dissolution dans l'eau à 37°C pendant 20 minutes), les capsules sont donc pelliculées d'une couche comprenant du polychlorure de vinylidène. Préférentiellement, la quantité de polychlorure de vinylidène est de 50 % à 100 % en poids par rapport au poids sec total de la couche de pelliculant, en particulier entre 60% à 99%, en particulier entre 70% et 98%, plus particulièrement entre 80% et 97%, en plus particulièrement entre 90% et 96%. Le polychlorure de vinylidène est appliqué par un procédé de pelliculage par pulvérisation à l'air (ou encore appelée « pulvérisation pneumatique ») sur les capsules d'une solution comprenant du polychlorure de vinylidène dilué dans l'eau comme solvant.

Dans un premier mode de réalisation, le polychlorure de vinylidène est utilisé seul.

Dans un second mode de réalisation, le polychlorure de vinylidène est utilisé en mélange avec au moins un plastifiant afin de pallier au fait que le PVDC peut, selon les conditions, devenir cassant. Les plastifiants peuvent être choisis parmi le triéthylcitrate, les alcools polyhydriques tels que le glycérol, le sorbitol, et le maltitol, le polyvinylalcool, les mono-, di-, et oligo-saccharides, la triacétine, le polyéthylène glycol ou un de leurs mélanges. Avantageusement, le triéthylecitrate est utilisé en tant que plastifiant en mélange avec le polychlorure de vinylidène.

Le plastifiant peut être utilisé à hauteur de 0 à 20 % en poids par rapport au poids sec total de la couche de pelliculage.

Avantageusement, l'épaisseur de la couche de pelliculage est comprise entre 1 et 200 µm, de préférence entre 3 et 100 µm et encore plus préférablement entre 3 et 50 µm.

Un avantage de la capsule selon la présente invention est qu'elle émet un claquement audible lorsqu'elle est rompue. Ceci permet au consommateur d'être « averti » de l'éclatement effectif de la capsule, lorsque souhaité.

La coque de la capsule selon l'invention comprend avantageusement un hydrocolloïde. Préférentiellement, l'hydrocolloïde selon la présente invention est un polymère biosourcé. Par polymère biosourcé on entend un polymère synthétique partiellement (généralement > 20 %) ou totalement obtenu à partir de dérivés issus de la biomasse. Le caractère biosourcé d'un polymère peut être notamment déterminé à partir de sa teneur en C14, selon la norme ASTM D6866.

L'hydrocolloïde de la coque de la capsule est choisi parmi la gomme gellane, la gélatine (d'origine animale ou d'origine biotechnologique), le collagène, les alginates, les carraghénanes, l'agar-agar, le chitosan et ses dérivés, les pectines, la gomme arabique, la gomme ghatti, la gomme pullulane, la gomme mannane, les protéines végétales ou un de leurs mélanges. La quantité dudit ou desdits hydrocolloïdes présents dans la coque est de 4 à 95 % en poids, de préférence de 4 % à 75 % en poids, et encore plus préférentiellement de 20 % à 50 % en poids par rapport au poids total sec de la coque. Dans un mode de réalisation préféré, l'hydrocolloïde sélectionné est la gomme gellane utilisée seule ou en combinaison avec la gélatine. Dans un autre mode de réalisation préféré, l'hydrocolloïde est sélectionné parmi les carraghénanes.

Des agents de charge peuvent également être inclus dans la composition de la coque ; par agent de charge, on entend toute matière appropriée pouvant augmenter le pourcentage de matière sèche dans la phase liquide externe et donc après co-extrusion dans la coque de la capsule obtenue. L'augmentation de la quantité de matière sèche dans la coque de la capsule a pour résultat de solidifier ladite coque et de la rendre physiquement plus résistante. De préférence, l'agent de charge est choisi dans le groupe comprenant les dérivés d'amidon tels que la dextrine, la maltodextrine, la cyclo-dextrine (alpha, bêta ou gamma), les dérivés d'amidon hydroxypropylé, ou les dérivés cellulosiques tels que l'hydroxypropylméthylcellulose (HPMC), l'hydroxypropylcellulose (HPC), la méthylcellulose (MC), la carboxyméthylcellulose (CMC)), alcool polyvinylique, polyols ou leurs mélanges. La dextrine est l'agent de charge préféré. La quantité d'agent de charge dans la coque est au maximum de 98,5%, de préférence de 25 à 95% plus préférentiellement de 40 à 80% et encore plus préférentiellement de 50 à 60% en poids par rapport au poids total sec de la coque.

La coque peut avantageusement comprendre un colorant qui peut rendre plus attrayante la capsule comprenant la composition aromatique. L'agent colorant est de préférence choisi parmi les colorants et les pigments d'origine alimentaire. La coloration peut être dans la masse de la coque ou appliquée par un procédé d'enrobage additionnel.

Selon un mode de réalisation, le poids sec de la coque est compris entre 5 et 70 %, de préférence entre 8 et 50 %, plus préférentiellement entre 8 et 20 % en poids par rapport au poids sec total de la capsule.

Préférentiellement, la capsule a un diamètre compris entre 1 et 6 mm. Plus préférentiellement, la capsule a un diamètre compris entre 2,5 et 5 mm.

Avantageusement, l'épaisseur de la coque de la capsule (sans le pelliculage) est comprise entre 10 µm et 300 µm, de préférence entre 20 µm et 200 µm, et encore plus préférablement entre 30 µm et 150 µm.

Il existe un lien entre l'épaisseur de la couche de pelliculant, le diamètre de la capsule, et la résistance à l'éclatement de la capsule pelliculée. En effet, la Demanderesse a établi qu'un ratio particulier entre l'épaisseur de la couche de pelliculant et le diamètre de la capsule permet de s'assurer que la capsule pelliculée aura la résistance à l'éclatement requise.

Ratio (R) = (épaisseur de la couche de pelliculant x 2) / diamètre de la capsule.

Avantageusement, le ratio ci-dessus est supérieur ou égal à 0,18, avantageusement supérieur ou égal à 0,2, avantageusement supérieur ou égal à 0,3, et encore plus préférentiellement supérieur ou égal à 0,4.

Le cœur de la capsule comprend un ou plusieurs solvants lipophiles classiquement utilisés dans l'industrie alimentaire.

Dans un mode de réalisation préféré, ces solvants lipophiles peuvent être des triglycérides, notamment des triglycérides à chaîne moyenne, et en particulier des triglycérides d'acide caprylique et caprique, ou des mélanges de triglycérides tels que l'huile végétale, l'huile d'olive, l'huile de tournesol, l'huile de maïs, l'huile d'arachide, l'huile de pépins de raisin, l'huile de germe de blé, les huiles minérales et les huiles de silicone, ou un de leurs mélanges.

La quantité de solvant lipophile dans le cœur d'une capsule selon l'invention est de l'ordre de 0,01 % à 90 %, préférentiellement de 25 % à 75 %, du poids total de la capsule.

Le cœur peut également comprendre un arôme comprenant une ou plusieurs molécules aromatiques telles qu'utilisées classiquement dans la formulation de compositions aromatisantes. De telles substances aromatisantes sont mentionnées par exemple, dans « Common Fragrance and Flavor Materials », Wiley-VCH, Weinheim, 2006.

On citera notamment les hydrocarbures aromatiques, terpéniques et/ou sesquiter-péniques, et plus particulièrement les huiles essentielles, les alcools, les aldéhydes, les phénols, les acides carboxyliques sous leurs diverses formes, les acétals et éthers aromatiques, les hétérocycles azotés, les cétones, les sulfures, les disulfures et les mercaptans qui peut être aromatique ou non aromatique.

Le cœur peut également comprendre une ou plusieurs charges telles qu'utilisées dans les émulsions aromatiques. On citera la gomme dammar, les résines de bois du type gomme ester, l'isobutyrate d'acétate de saccharose (SAIB) ou les huiles végétales bromées. La fonction de ces charges est d'ajuster la densité du cœur liquide.

Le cœur peut également comprendre un ou plusieurs édulcorants, qui peuvent se présenter sous la forme d'une solution ou suspension dans l'éthanol. Des exemples d'édulcorants appropriés peuvent être, mais sans s'y limiter, l'aspartame, la saccharine, le NHDC, le sucralose, l'acésulfame, le néotame, la stévia et ses dérivés etc. Le cœur peut également comprendre un ou plusieurs agents aromatiques "sensates", qui procurent soit un effet rafraîchissant soit un effet chaud en bouche. Des agents rafraîchissants appropriés peuvent être, sans s'y limiter, le succinate de menthyle et ses dérivés, en particulier Physcool^{®}. Un agent à effet chaud approprié peut-être, sans s'y limiter, l'éther vanillyl éthylique, ou le gold root.

Des exemples d'arômes complexes appropriés sont la vanille, le café, le chocolat, la cannelle, la menthe.

Lorsque le cœur de la capsule comprend plusieurs arômes, la quantité totale du mélange d'arômes est comprise entre 5 % et 60% en poids par rapport au poids total du cœur de la capsule.

Le deuxième objet de la présente invention se rapporte à un sachet à usage oral pour une libération immédiate et durable d'un arôme caractérisé en ce qu'il comprend une ou plusieurs capsules contenant ledit arôme telles définies précédemment, lesdites capsules étant disposée(s) à l'intérieur du sachet à usage oral. Une des applications des capsules selon la présente invention, est l'utilisation pour l'aromatisation de sachets oraux encore appelés snus, lesdits sachets étant poreux et comprenant ou non du tabac. Le principal avantage de l'utilisation des capsules dans ces produits snus est qu'elles permettent une aromatisation par libération de l'arôme de manière immédiate et durable, sous forme d'une « explosion ». Un autre avantage réside dans le fait de permettre au consommateur de choisir le moment précis lors duquel il va éclater la capsule aromatisée contenue dans le sachet, permettant ainsi de libérer les agents aromatisants. En effet, les consommateurs de snus, ont l'habitude de garder ledit sachet en bouche jusqu'à une heure. Il est donc indispensable que le consommateur puisse être en mesure d'éclater la capsule selon l'invention en s'en rendant compte à la fois par l'émission d'un claquement audible, mais également par la sensation d'éclatement de ladite capsule entre les dents. Par conséquent, la capsule doit ainsi supporter de rester dans le milieu chaud et humide que constitue la salive (37°C à pH entre 6,8 et 7,5), pendant une longue période de temps (en moyenne une heure), tout en conservant des propriétés de dureté et déformabilité adéquates.

Dans un premier mode de réalisation, le sachet selon l'invention comprend du tabac sous forme de feuilles ou sous forme de tabac épuisé. Ce type de produit en sachet à usage oral correspond au snus classique, dans le sens où celui-ci comprend du tabac. Le tabac présent dans les sachets présente un taux d'humidité très important, d'où l'importance pour les capsules de résister à l'eau. En effet, en tenant compte de l'humidité du tabac de près de 40%, l'humidité apportée par la salive lorsque le sachet est placé dans la bouche, ainsi que la température dans la bouche, le taux global d'humidité peut atteindre les 95%.

Dans un second mode de réalisation, le sachet à usage oral selon l'invention ne comprend pas de tabac. Dans ce mode de réalisation, le tabac est remplacé par un mélange comprenant des fibres d'acétate de cellulose, une forte quantité d'humectants, des agents de pH, avec ou sans nicotine. Ce nouveau type de produit a été développé ces dernières années afin de contourner la règlementation interdisant les snus contenant du tabac. Mais ces produits reproduisant l'effet d'un snus classique, présentent les mêmes inconvénients que les snus classiques avec tabac, en ce sens que le taux d'humidité y est élevé à cause des humectants présents dans le sachet. En outre, que les sachets comprennent ou non du tabac, ceux-ci sont conditionnés dans de petites boites où l'humidité est extrêmement élevée, puisqu'elle est nécessaire afin d'assurer la qualité du produit avant sa consommation.

Le sachet selon l'invention comprend une ou plusieurs capsules.

Selon un mode de réalisation, le sachet selon l'invention comprend en outre des fibres végétales, et/ou des agents aromatiques encapsulés ou non, et/ou des agents rem-plissants et/ou des agents humectant disposés à l'intérieur du sachet.

Ledit sachet à usage oral peut également comprendre d'autres agents aromatisants présents sous diverses formes, notamment encapsulés ou non.

Un troisième objet de la présente invention se rapporte à un produit consommable comprenant une partie comprenant un filtre et une autre partie comprenant du tabac, caractérisé en ce que le filtre comprend une ou plusieurs capsules selon l'invention.

Face au recul des ventes de cigarettes, l'industrie du tabac a développé de nouveaux produits dits à « nocivité réduite ». Parmi ces produits dits à « nocivité réduite », il existe des dispositifs de tabac à chauffer qui permettent de chauffer électriquement des « mini-cigarettes » ou du tabac en « capsule » entre 180° et 350° (contre 600° à 900° pour la cigarette combustible) afin d'en libérer un aérosol. Ces dispositifs qui chauffent le tabac sans le brûler, diffusent de la nicotine sans combustion et sans fumée, simplement par aérosolisation.

Une application des capsules selon la présente invention, est leur utilisation pour l'aromatisation de l'aérosol (ou « fumée ») formé lorsqu'elles sont utilisées dans des dispositifs de tabac à chauffer. Lorsqu'un dispositif de tabac à chauffer est utilisé, l'aérosol formé a une teneur en humidité élevée et peut atteindre des températures comprises entre 50°C et 70°C. Le fait que la capsule résiste à un test d'immersion dans l'eau à 60°C pendant 6 minutes (ce qui correspond au temps de consommation du dispositif) tout en conservant ses propriétés de résistance à l'éclatement en fait un candidat idéal pour cette application.

Les capsules selon l'invention peuvent être incorporées dans un produit consommable comprenant une partie qui comprend un filtre (en acétate de cellulose comme dans les cigarettes classiques), et une autre partie qui comprend du tabac. La capsule selon l'invention ainsi placée dans le filtre peut être éclatée à tout moment par le consommateur tout en conservant des propriétés de dureté et de déformabilité requises afin que ledit consommateur sache exactement à quel moment il a éclaté ladite capsule pour que celle-ci libère son contenu aromatique dans le filtre.

Le produit consommable comprend une ou plusieurs capsules selon l'invention.

Avantageusement, le produit consommable selon l'invention est à usage unique et est destiné à être utilisé comme recharge à tabac dans un dispositif de tabac à chauffer.

Un quatrième objet de la présente invention se rapporte à un dispositif de tabac à chauffer, caractérisé en ce qu'il comprend le produit consommable selon l'invention. Un dispositif de tabac à chauffer comme son nom l'indique, chauffe le tabac à une température comprise entre 30 et 300°C contrairement aux cigarettes classiques dans lesquelles le tabac est brûlé et atteint une température entre 700 et 800°C. Dans ce type de dispositif, le tabac chauffé entraîne la formation d'un aérosol qui peut être aromatisé notamment grâce à une capsule selon la présente invention. Le produit consommable selon l'invention est inséré dans le dispositif à fumer. Le consommateur met en marche ledit dispositif, le tabac est alors chauffé par ledit dispositif. Le consommateur peut alors à tout moment écraser la capsule selon l'invention qui se trouve dans le filtre du produit consommable, et ainsi aromatiser l'aérosol formé par le chauffage du tabac.

Un cinquième objet selon la présente invention se rapporte à un procédé de fabrication d'une capsule cassable sans soudure comprenant une coque et un cœur, comprenant les étapes de :
(A) co-extrusion d'une phase liquide externe hydrophile et d'une phase liquide interne lipophile, la phase liquide externe comprenant de 4 à 95 % en poids d'un hydrocolloïde par rapport au poids total sec de la coque, la phase liquide interne comprenant de 5 à 70 % en poids d'agents aromatisants par rapport au poids total du cœur ;
(B) solidification et/ou gélification de la surface de la capsule obtenue à l'étape (A) par immersion dans un fluide dont la température est comprise entre 1°C et 25°C ;
(C) séchage de la capsule obtenue à l'étape (B) ;
(D) pelliculage de la capsule obtenue à l'étape (C) par un procédé de pelliculage par pulvérisation à l'air à l'aide d'une solution de pelliculage comprenant du polychlorure de vinylidène et de l'eau ;
(E) récupération de la capsule obtenue à l'étape (D).

Le processus de co-extrusion est une extrusion synchrone de deux liquides : la phase liquide externe et hydrophile, et la phase liquide interne et lipophile. Le processus de co-extrusion comprend trois étapes principales : la formation de gouttes, la solidification de la coque et la collecte des capsules. Les capsules de l'invention peuvent être produites par tout procédé de co-extrusion approprié. De préférence, les capsules sont produites par un appareil et un procédé tels que décrits dans EP 513603.

Selon un mode de réalisation de l'invention, après l'étape de co-extrusion, l'étape de solidification est réalisée en maintenant au froid les capsules afin d'assurer une bonne gélification de la coque par exemple en les mettant en contact avec un fluide froid. Le fluide froid est de préférence de l'huile froide. Par froid au sens de la présente invention, on entend une température comprise entre 1 et 25°C, de préférence 2 et 10°C, plus préférentiellement entre 4 et 6°C. Les capsules peuvent ensuite être centrifugées afin d'éliminer l'excédent d'huile, éventuellement lavées avec un solvant organique - également pour éliminer l'excédent d'huile - et séchées. Selon un mode de réalisation de l'invention, après l'étape de co-extrusion, et éventuellement l'étape de solidification, les capsules sont centrifugées.

Selon un autre mode de réalisation de l'invention, les capsules sont co-extrudées, centrifugées et éventuellement immergées dans une solution ou une émulsion contenant un agent permettant de durcir la coque des capsules, ou agent chélateur.

L'agent chélateur peut être l'éthanol ou tout autre solvant organique anhydre, maintenu à une température comprise entre 0 et 25°C, plus particulièrement entre 10 et 20°C.

L'agent chélateur peut également être un bain d'ions calcium, par exemple de chlorure de calcium, de phosphate dicalcique ou de sulfate de calcium, ayant un pH compris entre 5 et 8. Le bain d'ions calcium est de préférence à une température de 0 à 25°C, de préférence de 10 à 20°C.

Après l'étape d'immersion (B), les capsules sont séchées (étape (C)), par exemple dans un courant d'air à température et humidité contrôlées. L'humidité relative de l'air de séchage est de 20 % à 60 %, de préférence de 30 à 50 % ; la température de l'air de séchage est de 15 à 60°C, de préférence de 35 à 50°C. Si besoin, l'huile de surface peut être éliminée grâce à un agent adsorbant tel que la silice, ou de l'amidon ajouté pendant le séchage, entre 0,1 et 5%, préférentiellement entre 0,1 et 2%.

L'étape (D) est l'étape cruciale de pelliculage des capsules, étape au cours de laquelle une couche externe de polychlorure de vinylidène est appliquée sur les capsules. Par « pelliculage » on entend un procédé permettant de déposer une fine couche d'un agent pelliculant sur un support. Dans le cas présent, le procédé de pelliculage est effectué par un procédé de pulvérisation d'air d'une solution d'un agent pelliculant (ici le polychlorure de vinylidène) afin de vectoriser les microgouttelettes générées sur un support (ici la capsule). Pour ces raisons, on distingue bien le procédé de pelliculage du procédé d'enrobage qui lui permet de recouvrir en couche épaisse un support, sans utilisation de fluide vecteur (donc sans air) et par tout procédé autre que la pulvérisation.

L'étape de pelliculage est réalisée par un procédé de pulvérisation à l'air avec une solution comprenant au moins du polychlorure de vinylidène et de l'eau. Dans un premier mode de réalisation, le polychlorure de vinylidène est utilisé en solution à hauteur de 8 à 50 % en poids dilué dans de l'eau.

Préférentiellement, la solution de pelliculage comprend du polychlorure de vinylidène, de l'eau et au moins un plastifiant choisi parmi le triéthylcitrate, les alcools polyhydriques tels que le glycérol, le sorbitol, et le maltitol, le polyvinylalcool, les mono-, di-, et oligo-saccharides, la triacétine, et le polyéthylène glycol.

Les capsules fabriquées au moyen du procédé de l'invention sont essentiellement ou parfaitement sphériques et de taille homogène.

Un sixième objet de la présente invention se rapporte à l'utilisation d'une capsule selon l'invention, comme agent de libération immédiate et durable d'un arôme, ladite capsule étant disposée dans un sachet à usage oral ou un produit consommable comprenant un filtre et du tabac, notamment destiné à être utilisé dans un dispositif de tabac à chauffer. Dans ce mode de réalisation, lorsque la capsule est rompue dans un sachet à usage oral ou un produit consommable, celle-ci émet un claquement audible et libère l'arôme qu'elle contient en éclatant.

Un septième objet de la présente invention se rapporte à une méthode pour aromatiser un produit en sachet à usage oral selon l'invention par un consommateur, comprenant les étapes suivantes :
- le consommateur place ledit sachet à usage oral entre sa gencive et sa joue ou sa lèvre supérieure notamment pendant 5 à 60 minutes ;
- le consommateur éclate entre ses dents, la ou les capsule(s) comprise(s) dans le sachet à usage oral afin de libérer dans sa bouche l'arôme contenu dans la capsule.

L'invention est illustrée ci-dessous par les exemples suivants, qui ne doivent pas être considérés comme limitant la portée de l'invention, et doivent être lus en référence aux figures.

### Exemples

### EXEMPLE 1

### 1. Composition de la capsule avant pelliculage (Tableau 1)

Les % sont exprimés en poids.

**[Tableaux1]**

| 1. | Matière première | % |
|---|---|---|
| S | CITRATE DE SODIUM | 0,17% |
| S | GOMME GELLANE | 1,53% |
| S | GELATINE POISSON | 1,70% |
| S | GELATINE BŒUF | 1,70% |
| S | SORBITOL | 0,85% |
| S | GLYCERINE | 0,85% |
| S | HP AMIDON | 0,43% |
| S | DEXTRINE | 7,67% |
| S | COLORANT TARTRAZINE | 0,01% |
| S | SILICE | 1,50% |
| S | EAU | 1,50% |
| F | TCM | 70,12% |
| F | MENTHOL | 4,23% |
| F | COMPOSITION AROMATIQUE | 7,72% |
| | Total | 100,00% |

| | | |
|---|---|---|
| F = Ingrédients contenus dans l'arôme de la capsule S= Ingrédients contenus dans la coque de la capsule | | |

Préparation du film de la capsule :
- l'eau, le citrate de sodium, la glycérine et le sorbitol sont pesés dans un bécher, puis le mélange est mis sous agitation et chauffé à 85°C,
- la gomme gellane est pesée et incorporée dans le bécher,
- les gélatines, la dextrine, l'amidon et les colorants sont pesés et incorporés dans le bécher, et
- le mélange est mis sous agitation jusqu'à solubilisation des ingrédients, puis laissé pour dégazer.

Mode opératoire de la co-extrusion :
- pomper la solution de film ci-dessus à 85°C dans la buse concentrique,
- pomper séparément une solution de base liquide aromatisée composée de menthol, d'huile essentielle de menthe et de molécules aromatiques dans du MCT. A température ambiante vers la buse concentrique,
- extruder simultanément les deux solutions à travers les buses coaxiales dans un TCM à basse température (approx. 10°C). La co-extrusion provoque instantanément la formation de deux gouttes l'une dans l'autre appelées cœur et coque de rapport d'environ 90/10,
- la solution de l'enveloppe extérieure se gélifie autour du cœur aromatique grâce à la baisse de température,
- recueillir les capsules gélifiées humides dans le MCT froid et laisser se solidifier à 4°C pendant 1h,
- retirer le MCT par centrifugation,
- malaxer puis sécher les capsules dans un sécheur à l'aide d'un flux d'air chaud (environ 45°C) et d'un auxiliaire de séchage (silice), et
- récupérer les capsules séchées et tamiser.

### 2. Préparation de la solution de pelliculage (Tableau 2)

Les % sont exprimés en poids.

**[Tableaux2]**

| | |
|---|---|
| SUSPENSION de PVDC | 35,29 % |
| TRIETHYLE CITRATE (TEC) | 2,00 % |
| EAU | 62,71 % |
| | Total 100,00 % |

Mode opératoire :
- peser l'eau dans un bécher,
- peser le polymère (PVDC) et le plastifiant (TEC),
- verser sous agitation la solution de polymère et le plastifiant et laisser pendant 15 min à température ambiante,
- contrôler l'agitation pour éviter la formation de mousse, et
- maintenir sous faible agitation pendant le processus de pelliculage.

Le Tableau 3 ci-dessous reprend les caractéristiques de la solution de pelliculage.

**[Tableaux3]**

| | | |
|---|---|---|
| SOLUTION DE PELLICULAGE | Matière sèche (% en poids) | 20 |
| | viscosité (Cp) | 1,88 |
| | pH à 20°C | 2,1 |
| | densité (g/cm3) | 1,094 |

### 3. Procédé de pelliculage :

- Introduire les capsules obtenues à l'issue de la coextrusion dans la turbine de pelliculage.
- Peser la solution de pelliculage sur une balance.
- Installer les buses de pulvérisation désirées préalablement chargées et purgées en agent de pelliculage à l'intérieur de la turbine de pelliculage.
- Faire tourner la turbine à la vitesse de rotation souhaitée.
- Préchauffez l'air d'entrée à 40°C et au débit souhaité.
- Commencez à pulvériser la solution de polymère lorsque la température de la capsule à pelliculer est atteinte (environ 26°C).
- Arrêtez la pulvérisation lorsque le pourcentage de dépôt sec souhaité est atteint (c'est-à-dire lorsque le poids souhaité de la solution de pelliculage à appliquer est atteint).
- Effectuez une étape de stabilisation en refroidissant la température de l'air d'entrée (environ 20 min).

### 4. Analyses des capsules avant et après pelliculage, et après test d'immersion et test de dissolution (Tableau 4)

Les capsules pelliculées sont soumises à un test d'immersion dans l'eau à 60°C pendant 6 minutes selon le protocole suivant :

### Préparation :

- Préchauffer l'eau qui servira au test.
- Compter 200 capsules à l'aide de la plaque de comptage.
- Afin d'éliminer toute trace d'huile résiduelle ou autre impureté, plonger les capsules dans 200 ml d'eau déminéralisée à température ambiante, sous agitation (250 RPM), pendant 20s.

Récupérer les capsules à l'aide d'une passoire et les sécher légèrement sur de la ouate.

### Test d'immersion :

- Mettre le bain marie en route, fixer la température à 60°C pour une température interne dans le bécher à 60°C +/- 1°C.
- Peser 200 g d'eau déminéralisée dans le bécher.
- Mettre le bécher dans le bain marie et introduire le barreau aimanté, mettre en route l'agitation à 500 t/min.
- Verser les capsules dans le bêcher.
- Chronométrer 6 min.
- A l'issue des 6 min, noter la coloration de l'eau et compter le nombre de capsules éclatées ou qui remontent à la surface. On noter également la présence éventuelle d'odeur (qui correspondrait à l'arôme).
- Récupérer les capsules dans une passoire, les étaler sur de la ouate pour les sécher.
- Observer leur aspect et faire les analyses.

Les capsules pelliculées sont soumises à un test de dissolution dans l'eau à 37°C pendant 20 minutes selon le protocole suivant :
- Chauffer la cuve d'eau de bain marie à 39°C.
- Introduire de l'eau osmosée dans le bécher de test.
- Une fois que l'eau a atteint 37°C, mesurer le Ph qui doit être entre 6,8 et 7,5.
- Introduire dans le puit 21 capsules.
- Régler le chronomètre à 20 minutes.

### Démarrer la procédure :

- Le puit fait une descente de 55 mm à raison de 30 frappes par minutes.
- Les capsules restent complètement immergées dans l'eau à 37°C.
- Après 20 minutes sortir les capsules, les éponger légèrement avec de la ouate et faire les analyses.

Résultats des analyses des capsules avant et après pelliculage, et après test d'immersion et test de dissolution (Tableau 5).

**[Tableaux4]**

| | | | |
|---|---|---|---|
| 1. | CAPSULE AVANT PELLICULAGE | Poids Moyen (mg) | 63,6 |
| | | Diamètre (mm) | 5049 |
| | | Dureté (kgF) | 2,44 |
| | | Pourcentage de déformation avant rupture (%) | 45 |
| | | Son à la rupture (db) | 90 |
| CAPSULE FINALE PELLICULEE | | Poids Moyen (mg) | 65,3 |
| | | Diamètre (mm) | 5070 |
| | | Dureté (kgF) | 2,58 |
| | | Pourcentage de déformation avant rupture (%) | 48 |
| | | Son à la rupture (db) | 84 |
| CAPSULE FINALE PELLICULEE APRES TEST D'IMMERSION A 60°C PENDANT 6 MINUTES | | Dureté (kgF) | 2,35 |
| | | Pourcentage de déformation avant rupture (%) | 52 |
| | | Son à la rupture (db) | 83 |
| CAPSULE FINALE PELLICULEE APRES TEST DE DISSOLUTION DANS L'EAU A 37°C PENDANT 20 MINUTES | | Dureté (kgF) | 2,49 |
| | | Pourcentage de déformation avant rupture (%) | 31 |
| | | Son à la rupture (db) | 88 |

### [Tableau 4]

Analyses des capsules avant et après pelliculage, et après test d'immersion et test de dissolution (Tableau 4).

On constate d'après l'exemple 1, que la capsule pelliculée selon l'invention conserve à la fois :
- une résistance à l'éclatement (dureté) équivalente à celle mesurée avant les tests d'immersion et de dissolution ;
- la capacité d'émettre un claquement audible (supérieure à 80 db) équivalente à celle mesurée avant les tests d'immersion et de dissolution.

### EXEMPLE 2

Influence du « dépôt sec ».

Le dépôt sec est un facteur qui traduit l'épaisseur de la couche de pelliculant. Il est calculé en faisant le rapport (Poids Capsule Finale - Poids Capsule Initiale) / Poids Capsule Initiale.

Dans l'exemple 2, des capsules de diamètre équivalent (3,5 mm approx.) ont été fabriquées avec des dépôts secs variables afin d'évaluer l'influence du dépôt sec sur les propriétés des capsules.

Le tableau de la [Fig.1] décrit différentes compositions de capsules cœur/coque avant pelliculage.

Le tableau de la [Fig.2] décrit différentes solutions de pelliculage PVDC/TEC ainsi que les différents dépôts secs appliqués sur les capsules du tableau de la [Fig.1].

Le tableau de la [Fig.3] décrit les résultats des duretés, déformation, claquement audible des capsules avant et après test d'immersion et de dissolution.

On constate d'après ces tests, que les capsules de diamètre 3,5 mm ayant un dépôt sec inférieur à 1% (les capsules de référence 16030/AK3 1%) ne tiennent pas lors du test d'immersion dans l'eau à 60°C pendant 6 minutes, ni au test de dissolution dans l'eau à 37°C pendant 20 min.

### EXEMPLE 3

Les capsules sont fabriquées selon l'exemple 1. Le tableau de la [Fig.4] décrit les différentes formulations de capsules cœur-coque.

Dans un second temps, les capsules sont pelliculées selon l'exemple 1. Le tableau de la [Fig.5] décrit différentes formulations de solutions de pelliculage utilisant différents agents pelliculants et avec différentes valeurs de dépôts sec.

Les capsules pelliculées sont soumises à un test d'immersion dans l'eau à 60°C pendant 6 minutes et à un test de dissolution dans l'eau à 37°C pendant 20 minutes selon les protocoles tels que décrit dans l'exemple 1.Les analyses des capsules avant pelliculage, et après test d'immersion et test de dissolution sont conduites tel que décrit dans l'exemple 1. Les résultats sont résumés dans les Tableaux 5 et 6 ci-dessous, ainsi qu'à la [Fig.6].

Les Figures 7 et 8 sont des représentations graphiques des résultats décrits dans les Tableaux 5 et 6 et décrivent l'ensemble des résultats de dureté après test d'immersion et de dissolution selon l'agent pelliculant utilisé.

**[Tableau 5] Dureté et son à la rupture après test d'immersion.**

| Reference de la capsule | Taille (mm ) | Coque base Animal/Non Animal | Pelliculant | Dureté (kgF) | ET | Claquement audible (Oui/Non) | Dureté après test (KgF) | ET | Claquement audible après test (Oui/Non) |
|---|---|---|---|---|---|---|---|---|---|
| 210158A1 | 5 | G | None | 2,44 | 0,1 8 | Oui | 0,01 | 0 | Non |
| 210164 | 5 | G | PVDC | 2,57 | 0,2 | Oui | 2,35 | 0,3 5 | Oui |
| 547824 | 3,5 | G | None | 1,37 | 0,1 2 | Oui | 0,01 | 0 | Non |
| 16030 AK6 | 3,5 | G | PVDC | 1,64 | 0,1 5 | Oui | 1,53 | 0,2 3 | Oui |
| 363086 | 4,5 | G | None | 3,04 | 0,2 8 | Oui | 0,01 | 0 | Non |
| 15015 E1 | 4,5 | G | Chitosan | 3,54 | 0,3 2 | Oui | 1,26 | 0,1 7 | Non |
| 12044 A1 | 4,5 | G | HPMC | 2,48 | 0,4 6 | Oui | 0,84 | 0,4 3 | Non |
| 10042 B1 | 4,5 | G | Shellac | 1,2 | 0,4 4 | Oui | 0,01 | 0 | Non |
| 10042 F1 | 4,5 | G | EC | 2,72 | 0,34 | Oui | 2,15 | 0,18 | Non |
| ZG6626 | 5 | V | None | 2,23 | 0,4 | Oui | 0,01 | 0 | Non |
| 210057 A1 | 5 | V | PVDC | 2,23 | 0,45 | Oui | 2,12 | 0,43 | Oui |

| | | | | | | | | | |
|---|---|---|---|---|---|---|---|---|---|
| G= gélatine V= carraghénane ou gomme gellane | | | | | | | | | |

**[Tableau 6] Dureté et son à la rupture après test de dissolution.**

| 1. | Reference de la capsule | Taille (mm) | Coque base Animal/ Non Animal | Pelliculant | Dureté (kgF ) | ET | Claquement audible (Oui/Non) | Dureté apres test (Kg F) | ET | Claquement audible après test (Oui/Non ) |
|---|---|---|---|---|---|---|---|---|---|---|
| 210158A1 | | 5 | G | None | 2.44 | 0.1 8 | Oui | 0 | 0 | Non |
| 210164 | | 5 | G | PVDC | 2.57 | 0.2 | Oui | 2.49 | 0.4 3 | Oui |
| 547824 | | 3.5 | G | None | 1.37 | 0.1 2 | Oui | 1.35 | 0.2 1 | Oui |
| 16030 AK6 | | 3.5 | G | PVDC | 1.64 | 0.1 5 | Oui | 1.68 | 0.3 3 | Oui |
| 363086 | | 4.5 | G | None | 3.04 | 0.2 8 | Oui | 0.30 | 0.2 0 | Non |
| 15015 E1 | | 4.5 | G | Chitosan | 3.54 | 0.3 2 | Oui | 0.83 | 0.4 4 | Non |
| 12044 A1 | | 4.5 | G | HPMC | 2.48 | 0.4 6 | Oui | 0.53 | 0.0 9 | Non |
| 10042 B1 | | 4.5 | G | Shellac | 1.2 | 0.4 4 | Oui | 0.49 | 0.1 2 | Non |
| 10042 F1 | | 4.5 | G | EC | 2.72 | 0.3 4 | Oui | 2.04 | 0.2 1 | Oui |
| ZG6626 | | 5 | V | None | 2.23 | 0.4 | Oui | 0.00 | 0.0 0 | Non |
| 210057 A1 | | 5 | V | PVDC | 2.23 | 0.4 5 | Oui | 2.08 | 0.4 6 | Oui |

| | | | | | | | | | | |
|---|---|---|---|---|---|---|---|---|---|---|
| G= gélatine V= carraghénane ou gomme gellane | | | | | | | | | | |

On constate que toutes les capsules pelliculées à l'aide d'un polymère autre que le PVDC ne tiennent pas lors du test d'immersion dans l'eau à 60°C pendant 6 minutes.

Dans le cas de l'éthylcellulose, on constate que les capsules (référence 10042/F1) ont résisté au test d'immersion, cependant le son émis à la rupture de la capsule est bien inférieur à 80 db (49db). Cette résistance relative n'est pas due au fait que l'éthylcellulose apporte cette propriété, mais elle est due au fait que l'éthylcellulose est utilisée en grande quantité (15% de dépôt sec, cf Tableau [Fig.5]).

Le PVDC (ici utilisé en mélange avec le TEC) est le seul agent de pelliculage qui permet à la capsule de résister aux tests d'immersion et de dissolution.

### EXEMPLE 4

### G= gélatine

Influence de la taille de la capsule sur l'épaisseur de pelliculant. Relation entre l'épaisseur de pelliculant, le dépôt sec et la détermination du ratio (épaisseur de la couche de pelliculant) x 2 / diamètre de la capsule.

Dans l'exemple 4, des capsules de diamètres différents sont pelliculées selon l'exemple 1 avec du PVDC ou de l'éthylcellulose.

Les tableaux des Figures 9 à 11 résument les caractéristiques de pelliculage.

A valeur de dépôts secs identiques, l'épaisseur de la couche de pelliculant est différente selon la taille de la capsule. Quand le dépôt sec augmente, l'épaisseur de la couche de pelliculant augmente avec la taille de la capsule.

Par exemple, un dépôt sec de 3% pour une capsule de 3,5 mm de diamètre, n'a pas le même impact sur l'épaisseur de la couche de pelliculant qu'un dépôt sec de 3 % sur une capsule de 5 mm de diamètre. Elle est respectivement de 10,059 µm et de 14,364 µm.

Le ratio (épaisseur de la couche de pelliculant) x 2 / diamètre de la capsule quant à lui reste identique quel que soit la taille de la capsule, dans le cadre de l'exemple ci-dessus, R= 0,575.

## Revendications

1. Capsule cassable sans soudure de type cœur-coque,
- la coque comprenant un hydrocolloïde,
- le cœur comprenant un arôme et un solvant lipophile,
**caractérisée en ce que** ladite la coque est revêtue d'une couche de pelliculant lui conférant une résistance à l'eau, ladite couche de pelliculant comprenant du polychlorure de vinylidène.

2. Capsule cassable selon la revendication 1, **caractérisée en ce qu'**elle conserve sa résistance à l'éclatement après avoir été soumise à un test d'immersion à 60 °C pendant 6 minutes.

3. Capsule cassable selon l'une des revendications 1 ou 2, **caractérisée en ce qu'**elle présente une résistance à l'éclatement comprise entre 0,5 et 20 kgf après avoir été soumise à un test de dissolution dans l'eau à 37 °C pendant 20 minutes.

4. Capsule cassable selon l'une quelconque des revendications 1 à 3, **caractérisée en ce que** la quantité de polychlorure de vinylidène est de 50 % à 100 % en poids par rapport au poids total sec de la couche de pelliculant.

5. Capsule cassable selon l'une quelconque des revendications 1 à 4, **caractérisée en ce que** la couche de pelliculant comprend en outre un plastifiant.

6. Capsule cassable selon la revendication 5, **caractérisée en ce que** le plastifiant est choisi parmi le triéthylcitrate, les alcools polyhydriques tels que le glycérol, le sorbitol, et le maltitol, le polyvinylalcool, les mono-, di-, et oligo-saccharides, la triacétine, le polyéthylène glycol ou un de leurs mélanges.

7. Capsule cassable selon l'une quelconque des revendications 1 à 6, **caractérisée en ce que** l'épaisseur de la couche de pelliculant est comprise entre 1 et 200 µm.

8. Capsule cassable selon l'une quelconque des revendications 1 à 7, **caractérisée en ce qu'**elle émet un claquement audible lorsqu'elle est rompue.

9. Capsule cassable selon l'une quelconque des revendications 1 à 8, **caractérisée en ce que** la coque comprend un hydrocolloïde choisi parmi la gomme gellane, la gélatine, le collagène, les alginates, les carraghénanes, l'agar-agar, le chitosan et ses dérivés, les pectines, la gomme arabique, la gomme ghatti, la gomme pullulane, la gomme mannane, les protéines végétales, ou un de leurs mélanges.

10. Capsule cassable selon la revendication 9, **caractérisée en ce que** l'hydrocolloïde est la gomme gellane utilisée seule ou en combinaison avec la gélatine.

11. Capsule cassable selon la revendication 9, **caractérisée en ce que** l'hydrocolloïde est choisi parmi les carraghénanes.

12. Capsule cassable selon l'une quelconque des revendications 1 à 11, **caractérisée en ce que** la capsule a un diamètre compris entre 1 et 6 mm.

13. Capsule cassable selon l'une quelconque des revendications 1 à 12, **caractérisée en ce que** l'épaisseur de la coque de la capsule est comprise entre 10 µm et 300 µm.

14. Sachet à usage oral pour une libération immédiate et durable d'un arôme **caractérisé en ce qu'**il comprend une ou plusieurs capsules contenant ledit arôme selon l'une quelconque des revendications 1 à 13, lesdites capsules étant disposée(s) à l'intérieur du sachet.

15. Sachet à usage oral selon la revendication 14, **caractérisé en ce qu'**il comprend en outre du tabac sous forme de feuilles ou sous forme de tabac épuisé disposé à l'intérieur du sachet.

16. Sachet à usage oral selon la revendication 14, **caractérisé en ce qu'**il ne comprend pas de tabac disposé à l'intérieur du sachet.

17. Sachet à usage oral selon l'une quelconque des revendications 14 à 16, **caractérisé en ce qu'**il comprend en outre des fibres végétales, et/ou des agents aromatiques encapsulés ou non, et/ou des agents remplissant et/ ou des agents humectant disposés à l'intérieur du sachet.

18. Produit consommable comprenant une partie comprenant un filtre et une autre partie comprenant du tabac, **caractérisé en ce que** le filtre comprend une ou plusieurs capsules selon l'une quelconque des revendications 1 à 13.

19. Produit consommable selon la revendication 18, **caractérisé en ce qu'**il est à usage unique et est destiné à être utilisé comme recharge à tabac dans un dispositif de tabac à chauffer.

20. Dispositif de tabac à chauffer, **caractérisé en ce qu'**il comprend le produit consommable selon la revendication 18 ou 19.

21. Procédé de fabrication d'une capsule cassable sans soudure comprenant une coque et un cœur, comprenant les étapes de :
(A) co-extrusion d'une phase liquide externe hydrophile et d'une phase liquide interne lipophile, la phase liquide externe comprenant de 4 à 95 % en poids d'un hydrocolloïde par rapport au poids total sec de la coque, la phase liquide interne comprenant de 5 à 70 % en poids d'agents aromatisants par rapport au poids total du cœur ;
(B) solidification et/ou gélification de la surface de la capsule obtenue à l'étape (A) par immersion dans un fluide dont la température est comprise entre 1°C et 25°C ;
(C) séchage de la capsule obtenue à l'étape (B) ;
(D) pelliculage de la capsule obtenue à l'étape (C) par un procédé de pelliculage par pulvérisation à l'air à l'aide d'une solution de pelliculage comprenant du polychlorure de vinylidène et de l'eau ;
(E) récupération de la capsule obtenue à l'étape (D).

22. Procédé selon la revendication 21, **caractérisé en ce que** la solution de pelliculage comprend en outre un plastifiant choisi parmi le triéthylcitrate, les alcools polyhydriques tels que le glycérol, le sorbitol, et le maltitol, le polyvinylalcool, les mono-, di-, et oligo-saccharides, la triacétine, le polyéthylène glycol ou un de leurs mélanges.

23. Utilisation d'une capsule selon l'une quelconque des revendications 1 à 13, comme agent de libération immédiate et durable d'un arôme, ladite capsule étant disposée dans un produit en sachet à usage oral ou dans un produit consommable comprenant un filtre et du tabac, notamment destiné à être utilisé dans un dispositif de tabac à chauffer.

24. Utilisation selon la revendication 23, **caractérisée en ce que** lorsque la capsule est rompue dans le sachet à usage oral ou le produit consommable, celle-ci émet un claquement audible et libère l'arôme.

## Patentansprüche

1. Nahtlose brechbare Kapsel vom Kern-Hülle-Typ,
• wobei die Hülle ein Hydrokolloid umfasst,
• wobei der Kern ein Aroma und ein lipophiles Lösungsmittel umfasst,
**dadurch gekennzeichnet, dass** die Hülle mit einer Überzugsschicht beschichtet ist, die ihr eine Wasserbeständigkeit verleiht, wobei die Überzugsschicht Polyvinylidenchlorid umfasst.

2. Brechbare Kapsel nach Anspruch 1, **dadurch gekennzeichnet, dass** sie ihre Berstfestigkeit beibehält, nachdem sie 6 Minuten lang einem Eintauchtest bei 60 °C unterzogen wurde.

3. Brechbare Kapsel nach einem der Ansprüche 1 oder 2, **dadurch gekennzeichnet, dass** sie eine Berstfestigkeit zwischen 0,5 und 20 kgf aufweist, nachdem sie 20 Minuten lang einem Auflösungstest in Wasser bei 37 °C unterzogen wurde.

4. Brechbare Kapsel nach einem der Ansprüche 1 bis 3, **dadurch gekennzeichnet, dass** die Menge an Polyvinylidenchlorid 50 Gew.-% bis 100 Gew.-% bezogen auf das Trockengesamtgewicht der Überzugsschicht beträgt.

5. Brechbare Kapsel nach einem der Ansprüche 1 bis 4, **dadurch gekennzeichnet, dass** die Überzugsschicht ferner einen Weichmacher umfasst.

6. Brechbare Kapsel nach Anspruch 5, **dadurch gekennzeichnet, dass** der Weichmacher ausgewählt ist aus Triethylcitrat, mehrwertigen Alkoholen wie Glycerin, Sorbit und Maltit, Polyvinylalkohol, Mono-, Di-und Oligosacchariden, Triacetin, Polyethylenglycol oder einer Mischung davon.

7. Brechbare Kapsel nach einem der Ansprüche 1 bis 6, **dadurch gekennzeichnet, dass** die Dicke der Überzugsschicht zwischen 1 und 200 µm liegt.

8. Brechbare Kapsel nach einem der Ansprüche 1 bis 7, **dadurch gekennzeichnet, dass** sie ein hörbares Knacken erzeugt, wenn sie aufgebrochen wird.

9. Brechbare Kapsel nach einem der Ansprüche 1 bis 8, **dadurch gekennzeichnet, dass** die Hülle ein Hydrokolloid umfasst, ausgewählt aus Gellangummi, Gelatine, Kollagen, Alginaten, Carrageenen, Agar-Agar, Chitosan und seinen Derivaten, Pektinen, Gummi arabicum, Ghatti-Gummi, Pullulan-Gummi, Mannan-Gummi, pflanzlichen Proteinen oder einer Mischung davon.

10. Brechbare Kapsel nach Anspruch 9, **dadurch gekennzeichnet, dass** das Hydrokolloid Gellangummi ist, das allein oder in Kombination mit Gelatine verwendet wird.

11. Brechbare Kapsel nach Anspruch 9, **dadurch gekennzeichnet, dass** das Hydrokolloid ausgewählt ist aus Carrageenen.

12. Brechbare Kapsel nach einem der Ansprüche 1 bis 11, **dadurch gekennzeichnet, dass** die Kapsel einen Durchmesser zwischen 1 und 6 mm aufweist.

13. Brechbare Kapsel nach einem der Ansprüche 1 bis 12, **dadurch gekennzeichnet, dass** die Dicke der Hülle der Kapsel zwischen 10 µm und 300 µm liegt.

14. Sachet zur oralen Anwendung für eine sofortige und anhaltende Freisetzung eines Aromas, **dadurch gekennzeichnet, dass** es eine oder mehrere Kapseln umfasst, die das Aroma nach einem der Ansprüche 1 bis 13 enthalten, wobei die Kapsel(n) im Inneren des Sachets angeordnet ist/sind.

15. Sachet zur oralen Anwendung nach Anspruch 14, **dadurch gekennzeichnet, dass** es ferner Tabak in Form von Blättern oder in Form von ausgelaugtem Tabak umfasst, der im Inneren des Sachets angeordnet ist.

16. Sachet zur oralen Anwendung nach Anspruch 14, **dadurch gekennzeichnet, dass** es keinen im Inneren des Sachets angeordneten Tabak umfasst.

17. Sachet zur oralen Anwendung nach einem der Ansprüche 14 bis 16, **dadurch gekennzeichnet, dass** es ferner Pflanzenfasern und/oder Aromastoffe, ob verkapselt oder nicht, und/oder Füllstoffe und/oder Feuchthaltemittel umfasst, die im Inneren des Sachets angeordnet sind.

18. Verbrauchsprodukt, umfassend einen Teil, der einen Filter umfasst, und einen anderen Teil, der Tabak umfasst, **dadurch gekennzeichnet, dass** die Filter eine oder mehrere Kapseln nach einem der Ansprüche 1 bis 13 umfasst.

19. Verbrauchsprodukt nach Anspruch 18, **dadurch gekennzeichnet, dass** es für den Einmalgebrauch bestimmt ist und zur Verwendung als Tabaknachfüllung in einer Vorrichtung zum Erhitzen von Tabak vorgesehen ist.

20. Vorrichtung zum Erhitzen von Tabak, **dadurch gekennzeichnet, dass** sie das Verbrauchsprodukt nach Anspruch 18 oder 19 umfasst.

21. Verfahren zur Herstellung einer nahtlosen brechbaren Kapsel umfassend eine Hülle und einen Kern, umfassend die Schritte:
• (A) Coextrusion einer hydrophilen äußeren flüssigen Phase und einer lipophilen inneren flüssigen Phase, wobei die hydrophile äußere flüssige Phase 4 bis 95 Gew.-% eines Hydrokolloids bezogen auf das Trockengesamtgewicht der Hülle umfasst, wobei die lipophile innere flüssige Phase 5 bis 70 Gew.-% Aromastoffe bezogen auf das Gesamtgewicht des Kerns umfasst;
• (B) Verfestigung und/oder Gelierung der Oberfläche der in Schritt (A) erhaltenen Kapsel durch Eintauchen in ein Fluid, dessen Temperatur zwischen 1 °C und 25 °C liegt;
• (C) Trocknen der in Schritt (B) erhaltenen Kapsel;
• (D) Beschichten der in Schritt (C) erhaltenen Kapsel durch ein Luftsprühbeschichtungsverfahren unter Verwendung einer Beschichtungslösung, die Polyvinylidenchlorid und Wasser umfasst;
• (E) Gewinnen der in Schritt (D) erhaltenen Kapsel.

22. Verfahren nach Anspruch 21, **dadurch gekennzeichnet, dass** die Beschichtungslösung ferner einen Weichmacher umfasst, ausgewählt aus Triethylcitrat, mehrwertigen Alkoholen wie Glycerin, Sorbit und Maltit, Polyvinylalkohol, Mono-, Di- und Oligosacchariden, Triacetin, Polyethylenglycol oder einer Mischung davon.

23. Verwendung einer Kapsel nach einem der Ansprüche 1 bis 13 als Mittel zur sofortigen und anhaltenden Freisetzung eines Aromas, wobei die Kapsel in einem Sachet-Produkt zur oralen Anwendung oder in einem Verbrauchsprodukt umfassend einen Filter und Tabak angeordnet ist, insbesondere vorgesehen zur Verwendung in einer Vorrichtung zum Erhitzen von Tabak.

24. Verwendung nach Anspruch 23, **dadurch gekennzeichnet, dass**, wenn die Kapsel in dem Sachet zur oralen Anwendung oder dem Verbrauchsprodukt aufgebrochen wird, diese ein hörbares Knacken erzeugt und das Aroma freisetzt.

## Claims

1. Seamless breakable capsule of the core-shell type,
- the shell comprising a hydrocolloid,
- the core comprising a flavoring and a lipophilic solvent,
**characterized in that** said shell is coated with a film coating layer which gives it water resistance, said film coating layer comprising polyvinylidene chloride.

2. Breakable capsule according to claim 1, wherein it retains its burst resistance after being subjected to an immersion test at 60°C for 6 minutes.

3. Breakable capsule according to one of claims 1 or 2, wherein it has a burst resistance of between 0.5 and 20 kgf after having been subjected to a dissolution test in water at 37°C for 20 minutes.

4. Breakable capsule according to any one of claims 1 to 3, wherein the amount of polyvinylidene chloride is 50% to 100% by weight relative to the total dry weight of the film coating layer.

5. Breakable capsule according to any one of claims 1 to 4, wherein the film coating layer further comprises a plasticizer.

6. Breakable capsule according to claim 5, wherein the plasticizer is chosen from triethyl citrate, polyhydric alcohols such as glycerol, sorbitol, and maltitol, polyvinyl alcohol, mono-, di-, and oligosaccharides, triacetin, polyethylene glycol, or a mixture thereof.

7. Breakable capsule according to any one of claims 1 to 6, wherein the thickness of the film coating layer is between 1 and 200 µm.

8. Breakable capsule according to any one of claims 1 to 7, wherein it emits an audible pop when it is broken.

9. Breakable capsule according to any one of claims 1 to 8, wherein the shell comprises a hydrocolloid chosen from gellan gum, gelatin, collagen, alginates, carrageenans, agar-agar, chitosan and its derivatives, pectins, gum arabic, gum ghatti, pullulan gum, mannan gum, vegetable proteins, or a mixture thereof.

10. Breakable capsule according to claim 9, wherein the hydrocolloid is gellan gum used alone or in combination with gelatin.

11. Breakable capsule according to claim 9, wherein the hydrocolloid is chosen from the carrageenans.

12. Breakable capsule according to any one of claims 1 to 11, wherein the capsule has a diameter of between 1 and 6 mm.

13. Breakable capsule according to any one of claims 1 to 12, wherein the thickness of the shell of the capsule is between 10 µm and 300 µm.

14. Oral-use pouch for immediate and lasting release of a flavoring, **characterized in that** it comprises one or more capsules containing said flavoring according to any one of claims 1 to 13, said capsules being placed inside the pouch.

15. Oral-use pouch according to claim 14, wherein it further comprises tobacco in the form of leaves or in the form of ground tobacco placed inside the pouch.

16. Oral-use pouch according to claim 14, wherein it does not comprise tobacco placed inside the pouch.

17. Oral-use pouch according to any one of claims 14 to 16, further comprising plant fibers, and/or encapsulated or unencapsulated flavoring agents, and/or filling agents, and/or or humectants, placed inside the bag.

18. Consumable product comprising a portion comprising a filter and another portion comprising tobacco, **characterized in that** the filter comprises one or more capsules according to any one of claims 1 to 13.

19. Consumable product according to claim 18, wherein it is single-use and is intended to be used as a tobacco refill in a tobacco heating device.

20. Tobacco heating device, **characterized in that** it comprises the consumable product according to claim 18 or 19.

21. Method for manufacturing a seamless breakable capsule comprising a shell and a core, comprising the steps of:
(A) co-extrusion of a hydrophilic external liquid phase and a lipophilic internal liquid phase, the external liquid phase comprising from 4 to 95% by weight of a hydrocolloid relative to the total dry weight of the shell, the internal liquid phase comprising 5 to 70% by weight of flavoring agents relative to the total weight of the core;
(B) solidification and/or gelation of the surface of the capsule obtained in step (A), by immersion in a fluid that is at a temperature of between 1°C and 25°C;
(C) drying of the capsule obtained in step (B);
(D) film coating of the capsule obtained in step (C) by an air spray coating process using a film coating solution comprising polyvinylidene chloride and water;
(E) retrieval of the capsule obtained in step (D).

22. Method according to claim 21, wherein the film coating solution further comprises a plasticizer chosen from triethyl citrate, polyhydric alcohols such as glycerol, sorbitol, and maltitol, polyvinyl alcohol, mono-, di-, and oligosaccharides, triacetin, polyethylene glycol, or a mixture thereof.

23. Use of a capsule according to any one of claims 1 to 13, as an agent for the immediate and lasting release of a flavoring, said capsule being placed in a product contained in an oral-use pouch or in a consumable product comprising a filter and tobacco, in particular intended for use in a tobacco heating device.

24. Use according to claim 23, wherein, when the capsule is broken within the oral-use pouch or the consumable product, it emits an audible pop and releases the flavoring.
